# EUROPÄISCHE PATENTANMELDUNG

(11) **EP 1 069 325 A2**
(43) Veröffentlichungstag der Anmeldung: **17.01.2001**
(21) Anmeldenummer: 00111726.6
(22) Anmeldetag: 02.06.2000
(51) Int. Cl.: F16B 17/00

(54) **Schaft-Nabe-Verbindung mit Arretierung bei plastischer Verformung**

(30) Priorität: 15.07.1999 DE 19932660
(71) Anmelder: AEG Hausgeräte GmbH, 90429 Nürnberg (DE)
(72) Erfinder: Schröder, Walter, 8810 Horgen (CH)

(57) **Zusammenfassung**

Bei der Schaft-Nabe-Verbindung mit einer kraftschlüssigen Preßverbindüng zwischen Schaft (5) und Nabe (4) wird eine plastische Ausformung (56') des Schaftes aus Kunststoffes zur formschlüssigen Arretierung in einer Einbuchtung (46) der Nabe (4) verwendet.

Vorteil: sichere Selbsthemmung der Verbindung auch bei Kaltfluß des Kunststoffes

## Beschreibung

Die Erfindung betrifft eine Schaft-Nabe-Verbindung und Verfahren zum Herstellen einer Nabe für eine Schaft-Nabe-Verbindung.

Aus *DE 42 09 153 C2* ist eine Welle-Nabe-Verbindung bekannt, bei der auf der Umfangsfläche der Welle eine Mehrzahl keilförmiger Erhebungen und auf der Innenfläche der Nabe die gleiche Anzahl entsprechender keilförmiger Ausnehmungen angeordnet sind und die Steigung der Keilflächen im wesentlichen den Verlauf einer logarithmischen Spirale folgt und so flach ist, daß in Abhängigkeit von Material und Beschaffenheit der Oberflächen der Keilflächen sichere Selbsthemmung gegeben ist. Durch eine Drehbewegung der Nabe relativ zur Welle tritt nämlich zwischen den korrespondierenden Keilflächen von Welle und Nabe zunächst eine flächige Berührung, dann ein Reibschluß und bei noch weiterer Drehung schließlich eine rasch zunehmende, überall gleich hohe Flächenpressung (Kraftschluß, Preßverbindung) zwischen den Keilflächen ein. Die Drehbewegung wird fortgesetzt, bis entweder das vorgesehene, zu übertragende Moment oder die vorgesehene Winkelstellung zwischen Welle und Nabe erreicht ist. Zum Herstellen der Teilflächen von Welle und Nabe sind in der *DE 42 09 153 C2* ein Verfahren zur Abtragung von Material wie Fräsen oder Hobeln sowie ein Strangpreß- oder Strangziehverfahren angegeben. Als Materialien für Welle und Nabe sind Stahl, Leichtmetall und Kunststoff angegeben. Als Anwendungen sind die Verbindung von Nocken auf einer Nockenwelle oder von Zahnrädern auf einer Getriebewelle eines Kraftfahrzeugs, die Verbindung von Streckwerkswalzenabschnitten, beispielsweise bei Spinnereimaschinen, ein Wirkmaschinen-Gelenkgetriebe und die Verbindung von Rohren in Rohrkonstruktionen wie Geländern an Treppen oder Maschinen, Spulengatter für Textilmaschinen oder Leitern beschrieben.

Aus der *DE 196 33 541 A1* ist eine Weiterbildung der aus der *DE 42 09 153 C2* bekannten Welle-Nabe-Verbindung bekannt, bei der auf der Außenumfangsfläche der Welle und/Oder Innenumfangsfläche der Nabe in axialer Richtung der Welle bzw. Nabe zusätzlich zu den Keilflächen zumindest eine Erhebung und/oder eine Vertiefung zur axialen Sicherung der Verbindung angeordnet sind. Insbesondere können diese Erhebungen und Vertiefungen derart angeordnet sein, daß eine Art Gewinde entsteht, so daß in einer Ausführung als Bolzen für die Welle und einer Mutter für die Nabe ein Ersatz für eine Schraubverbindung angegeben wird, bei der zusätzlich zu der Axialsicherung eine axiale Vorspannkraft ähnlich einer üblichen Gewindeschraube erzeugt wird.

Bei einer aus *DE 42 09 153 C2* oder *DE 196 33 541 A1* bekannten Welle-Nabe-Verbindung (Schaft-Nabe-Verbindung) treten Probleme bei der Festigkeit der Verbindung auf, wenn Schaft und/oder Nabe aus einem Kunststoff bestehen. Aufgrund der hohen Preßdrücke auf der Wandung des aus Kunststoff bestehenden Teils kann es zu plastischen Verformungen und insbesondere einem Fließen des Kunststoffes kommen. Dies sind komplexe Vorgänge, die vom konkreten Kunststoffmaterial abhängen. Vereinfacht ausgedrückt, gibt der Kunststoff durch irreversible Strukturänderungen und Verformung dem auf ihm lastenden Druck nach und fließt von den Stellen des hohen Druckes weg. Man spricht diesen Effekt auch Kaltfluß, weil er auch bei Raumtemperatur im festen Kunststoff auftritt. Die plastische Verformung des Kunststoffes, insbesondere der Kaltfluß, setzt die wirkenden Preßkräfte der Preßverbindung zwischen Schaft und Nabe herab. Dadurch ist die Selbsthemmung der Schaft-Nabe-Verbindung herabgesetzt oder sogar ausgesetzt, so daß sich die Verbindung unbeabsichtigt lösen kann.

Der Erfindung liegt nun die Aufgabe zugrunde, eine Schaft-Nabe-Verbindung, bei der die genannten Nachteile des Standes der Technik beseitigt sind, sowie ein einfaches und kostengünstiges Verfahren zum Herstellen einer Nabe für eine solche Schaft-Nabe-Verbindung anzugeben.

Diese Aufgabe wird gemäß der Erfindung gelöst mit den Merkmalen des Anspruchs 1 bzw. des Anspruchs 12.

Die Schaft-Nabe-Verbindung umfaßt
a) eine Nabe mit einer Innenwandung, an der eine vorgegebene Anzahl von jeweils im Abstand zu einer Nabenachse in einer Umfangsrichtung zunehmenden oder abnehmenden Innenwandungsteilbereichen vorgesehen ist,
b) einen Schaft mit einer Außenwandung, an der eine vorgegebene Anzahl von jeweils im Abstand zu einer Schaftachse in Umfangsrichtung zunehmenden oder abnehmenden Außenwandungsteilbereichen vorgesehen ist,
   wobei
c) die Außenwandung des Schaftes und die Innenwandung der Nabe so aneinander angepaßt sind, daß der Schaft (in wenigstens einer bestimmten Stellung) in die Nabe ohne Kraftschluß einfügbar ist und durch eine Drehung zwischen Schaft und Nabe zwischen jedem der Außenwandungsteilbereiche des Schaftes und jeweils einem zugehörigen Innenwandungsteilbereich der Nabe ein vorgegebener Kraftschluß erzeugbar ist,
d) der Schaft zumindest an seiner Außenwandung aus einem (in fester Phase befindlichen) Material besteht, das bei dem vorgegebenen Kraftschluß eine plastische Verformung, d.h. eine anelastische, irreversible Verformung, zeigt,
e) die Innenwandung der Nabe an wenigstens einem ihrer Innenwandungsteilbereiche wenigstens eine Einbuchtung (Aussparung, Ausnehmung) oder Öffnung aufweist und
f) das plastisch verformbare Material bei dem vorgegebenen Kraftschluß, insbesondere nach einer materialabhängigen Zeitdauer, in die wenigstens eine Einbuchtung oder Öffnung eindringt.

Durch diese Maßnahmen wird erreicht, daß nach einer definierten Drehbewegung zwischen Schaft und Nabe sich der vorgegebene Kraftschluß zwischen den aufeinandergepreßten Wandungsbereichen von Nabe und Schaft einstellt mit Ausnahme jedes Bereiches, in dem eine Einbuchtung oder Öffnung in der Innenwandung der Nabe angeordnet ist. Gegenüber einer Einbuchtung oder Öffnung der Innenwandung der Nabe wäre die Außenwandung des Schaftes, falls keine Verformung des Schaftmaterials einträte, nämlich von der Nabenwandung beabstandet. Da das Material des Schaftes jedoch sich beim vorgegebenen Kraftschluß in den Bereichen mit Preßverbindung durch den ausgeübten Preßdruck plastisch zu verformen beginnt, dringt das Schaftmaterial wegen des im jeder Einbuchtung bzw. Öffnung der Nabe gegenüberliegenden Bereich des Schaftes nicht vorhandenen Druckes in die jeweilige Einbuchtung oder Öffnung der Nabe ein. Durch dieses gezielte Ausweichen des Schaftmaterials in die Einbuchtung oder Öffnung der Nabe werden aus dem Schaft Ausbuchtungen (Fortsätze, Vorsprünge) gebildet, die bei entsprechender Anpassung der Dimensionen jeder Einbuchtung bzw. Öffnung der Nabe in Formschluß und gegebenenfalls auch Kraftschluß mit der Innenwandung der Nabe treten. So kann der durch die plastische Verformung des Materials des Schaftes reduzierte Kraftschluß und die dadurch vergrößerte Gefahr eines unbeabsichtigten Lösens der Schaft-Nabe-Verbindung durch eine Arretierung des Schaftes in der Nabe mittels der in der Einbuchtung oder Öffnung der Nabe eingreifenden Ausbuchtung des Schaftes kompensiert werden. Wenn das Schaftmaterial bei dem vorgegebenen Kraftschluß bereits ein Kaltfließverhalten aufweist, also seine plastische Ausdehnung auch bei Druckentlastung weiter zunimmt, wird der Formschluß und gegebenfalls auch Kraftschluß des Schaftmaterials mit der Innenwandung der Nabe auch in der Einbuchtung bzw. Öffnung noch zusätzlich unterstützt. Das an sich für die Festigkeit der Schaft-Nabe-Verbindung nachteilige plastische Verformen und insbesondere Fließen des Materials des Schaftes bei Herstellen der Preßverbindung zwischen Schaft und Nabe wird somit gemäß der Erfindung in einen Vorteil umgemünzt, indem das fließende Material zum Bilden einer Anschlagssicherung (Arretierung) für die Schaft-Nabe-Verbindung ausgenutzt wird. Die Sicherung der Schaft-Nabe-Verbindung durch die beschriebene Arretierung kann nicht nur gegen eine Drehbewegung wirksam sein (Drehsicherung), sondern bei entsprechender Auslegung der Einbuchtung bzw. Öffnung in der Nabe auch gegen eine Axialbewegung (Axialsicherung).

Vorteilhafte Weiterbildungen und Ausgestaltungen gemäß der Erfindung ergeben sich aus den vom Anspruch 1 abhängigen Ansprüchen.

Das plastisch verformbare Material für den Schaft bzw. die Nabe ist vorzugsweise ein Polymer-Werkstoff.

Es kann nun vorzugsweise das zum jeweiligen Verbindungsteil (Schaft oder Nabe), das mit plastisch verformbarem Material gebildet ist, korrespondierende Verbindungsteil (Nabe bzw. Schaft) der Schaft-Nabe-Verbindung zumindest an der Verbindungfläche aus einem beim vorgegebenen Kraftschluß nicht plastisch verformbaren Material bestehen, insbesondere aus einem Metall, beispielsweise Stahl oder Aluminium, oder auch einem faserverstärkten Kunststoff.

Die Einbuchtung oder Öffnung kann nun in einer ersten Weiterbildung parallel zur Nabenachse bzw. Schaftachse offen sein, insbesondere in Gestalt einer Rille. Die Arretierung durch den ausgeformten Fortsatz und die korrespondierende Einbuchtung bzw. Öffnung wirkt dann nur in Drehrichtung.

Um die Arretierung sowohl gegen Drehung als auch axial, i.e. parallel zur Mittelachse von Nabe oder Schaft, zu erreichen, ist die Einbuchtung oder Öffnung in einer vorteilhaften zweiten Weiterbildung an den nicht an der Verbindungfläche liegenden Seiten geschlossen, so daß in allen Richtungen eine Sicherung gewährleistet ist.

Es können auch an der Innenwandung der Nabe bzw. der Außenwandung des Schaftes mehrere Einbuchtungen oder Öffnungen vorgesehen sein.

Die Steigung der aufeinanderzupressenden Wandungsteilbereiche von Nabe und Schaft in Umfangsrichtung ist vorzugsweise im wesentlichen konstant. Man erreicht so eine homogene Kraftverteilung über die gesamte Verbindungsfläche.

Die Nabe wird in einer vorteilhaften Ausführungsform bezuglich der Nabenachse mit einer Rotationssymmetrie einer vorgegebenen Zähligkeit erzeugt, insbesondere indem die Schneidkanten des Stanzstempels eine entsprechende Symmetrie aufweisen. Der demnach entsprechend symmetrische Schaft wird in dieser Ausführungsform bei der Drehung automatisch in der Nabe zentriert (selbstzentrierte Verbindung).

Die Maßnahmen gemäß der Erfindung sind demnach besonders vorteilhaft bei einer Schaft-Nabe-Verbindung mit einer flachen Nabe, insbesondere einer durch Stanzen eines Nabenkörpers erzeugten Nabe. Die Innenwandung der Nabe weist dann insbesondere eine parallel zur Nabenachse gemessene Höhe von höchstens etwa 5 mm, vorzugsweise höchstens 1 mm, auf. Insbesondere bei solchen Schaft-Nabe-Verbindungen kann das Fließen des Schaftmaterials die Verbindung lockern.

Ein bevorzugtes Verfahren zum Herstellen einer Nabe für die Schaft-Nabe-Verbindung ist gemäß Anspruch 12 ein Stanzprozeß.

Zur weiteren Erläuterung der Erfindung wird auf die Zeichnungen Bezug genommen, in denen Ausführungsbeispiele gemäß der Erfindung jeweils schematisch dargestellt sind. Es zeigen:
- FIG 1: einen Nabenkörper und ein Stanzwerkzeug in einem seitlichen Schnitt,
- FIG 2: das Stanzwerkzeug gemäß FIG 1 in einer Ansicht von unten,
- FIG 3: eine gestanzte Nabe in einem Nabenkörper in einem seitlichen Schnitt,
- FIG 4: die gestanzte Nabe gemäß FIG 3 in einer Draufsicht,
- FIG 5: eine Nabe in einer Draufsicht,
- FIG 6: einen zur Nabe gemäß FIG 5 korrespondierenden Schaft
- FIG 7: eine Schaft-Nabe-Verbindung mit einer Nabe gemäß FIG 5 und einem Schaft gemäß FIG 6,
- FIG 8: eine Schaft-Nabe-Verbindung mit einer Nabe gemäß FIG 5 und einem schaft gemäß FIG 6, bei der der Schaft plastisch verformt ist.
Einander entsprechende Teile sind in den FIG 1 bis 8 mit denselben Bezugszeichen versehen.

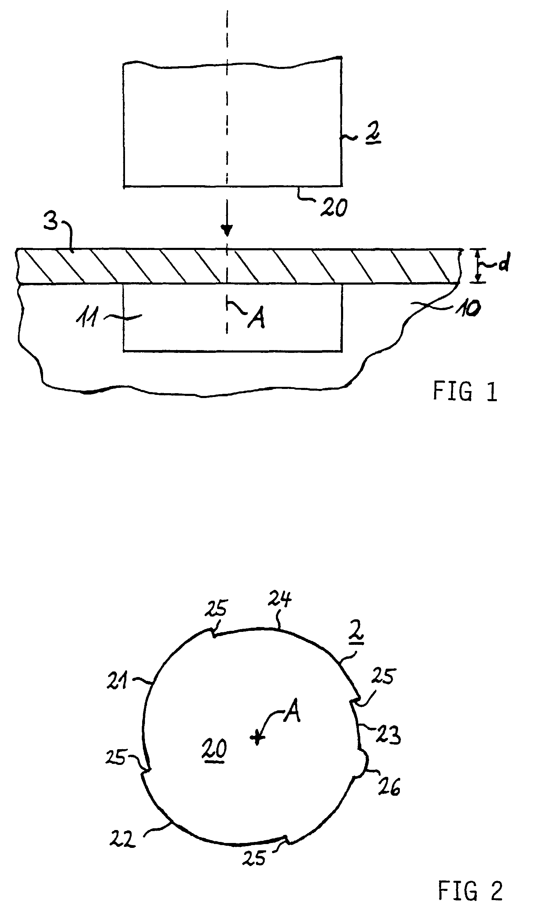

Das Stanzwerkzeug gemäß den FIG 1 und 2 weist einen Stanzstempel 2 und als Gegenstück eine Halterung 10 mit einer Ausnehmung 11 auf. Auf der Halterung (Tragekörper, Auflage, Matrix) 10 liegt ein zu stanzender, vorzugsweise plattenförmiger Nabenkörper 3 auf, der insbesondere eine gleichmäßige Dicke aufweisen kann. Die Dicke des Nabenkörpers 3 ist mit d bezeichnet. Der Stanzstempel 2 weist an der Kontur (Schneidkontur) seiner, vorzugsweise im wesentlichen flachen, Unterseite 20 mehrere, beispielsweise wie dargestellt vier, Schneidkanten 21 bis 24 und jeweils zwei dieser Schneidkanten 21 bis 24 verbindende Schneidkanten 25 auf.

Die Schneidkanten 21 bis 24 nehmen radial, d.h. in ihrem Abstand zu einer Mittelachse A des Schneidstempels 2 in einer vorgegebenen Umfangsrichtung (in Polarwinkelrichtung), hier im Uhrzeigersinn, monoton oder sogar streng monoton (kontinuierlich) zu. Gemäß FIG 2 im Uhrzeigersinn gesehen ist die radiale Steigung (Änderung des Abstands von der Mittelachse A mit dem Polarwinkel) der Schneidkanten 21 bis 24 also größer oder gleich bzw. immer größer Null. Insbesondere können die Schneidkanten 21 bis 24 die Gestalt von Spiralenabschnitten, vorzugsweise von logarithmischen Spiralenabschnitten, aufweisen. Bei logarithmischen Spiralenabschnitten ist die radiale Steigung in der Umfangsrichtung konstant. Die Steigungen (Ableitung des radialen Abstandes nach dem Polarwinkel) der radial ansteigenden oder abfallenden Wandbereiche der Nabe oder des Schaftes werden insbesondere zwischen 0,005 und 0,02 gewählt, sowohl bei Ausführungsformen mit in Umfangsrichtung konstanter Steigung als auch mit in Umfangsrichtung zunehmender oder abnehmender Steigung.

Zwischen den einzelnen Schneidkanten 21 bis 24 liegt jeweils eine Schneidkante 25, die die beiden benachbarten Schneidkanten 21 und 22 bzw. 22 und 23 bzw. 23 und 24 bzw. 24 und 21 miteinander verbindet. Im dargestellten Ausführungsbeispiel gemäß FIG 2 sind die Schneidkanten 25 im wesentlichen geradlinig und radial ausgerichtet. Auf die genaue Form der Schneidkanten 25 kommt es jedoch nicht an. Insbesondere können die Schneidkanten 25 auch einen flacheren Verlauf haben. Jedoch sollten die Schneidkanten 25 in Umfangsrichtung geringer ausgedehnt sein als die Schneidkanten 21 bis 24.

An wenigstens einer der Schneidkanten, im Beispiel gemäß FIG 2 an der Schneidkante 23, ist nun ein nach außen gerichteter Schneidvorsprung 26 vorgesehen, der, wie dargestellt, konvex, aber auch konkav geformt sein kann und einen größeren radialen Abstand von der Mittelachse A aufweist als die Schneidkante 23 im an den Schneidvorsprung 26 angrenzenden Bereich.

Im dargestellten Ausführungsbeispiel gemäß FIG 2 sind die Schneidkanten 21 bis 24 derart rotationssymmetrisch zueinander angeordnet, daß bei einer Drehung des Schneidstempels 2 um seine Mittelachse A um jeweils 90 Grad eine Deckungsgleichheit (Kongruenz), mit Ausnahme des Schneidvorsprungs 26, erreicht wird. Es liegt also -mathematisch ausgedrückteine vierzählige Rotationssymmetrie des Schneidstempels 2 bezüglich der Mittelachse A als Symmetrieachse vor.

In Abweichung von FIG 2 können auch weniger oder mehr Schneidkanten vorgesehen sein, deren radiale Steigung jeweils konstant sein oder auch in Umfangsrichtung zu- oder abnehmen kann. Der Schneidstempel 2 weist dann im allgemeinen bezüglich der Mittelachse A eine der Anzahl der Schneidkanten entsprechende Zähligkeit auf. Das Schneidwerkzeug 2 muß aber nicht rotationssymmetrisch sein, sondern es können die Schneidkanten auch asymmetrisch bezüglich der Mittelachse A angeordnet sein, wobei an den übrigen Außenwandungsbereichen des Schneidwerkzeuges 2 dann insbesondere eine zylindrische Form gewählt werden kann.

Beim Stanzprozeß wird nun der Stanzstempel 2 gemäß FIG 1 in einer parallel zur Mittelachse A liegenden Stanzrichtung entlang des dargestellten Pfeiles zu dem Nabenkörper 3 geführt und durch diesen mit einer vorgegebenen Stanzkraft (Stanzdruck), die in Abhängigkeit von dem Material des Nabenkörpers 3, der Dicke d des Nabenkörpers 3 und der Form und Materialbeschaffenheit des Stanzwerkzeugs 2 gewählt ist, gedrückt. Durch das flächige Aufsetzen des Stanzstempels 2 mit seiner Unterseite 20 auf die Oberfläche des Nabenkörpers 3 werden Verformungsprozesse im Nabenkörper 3 beim Stanzen reduziert. Der Stanzstempel 2 wird nach dem Durchschneiden des Nabenkörpers 3 noch ein Stück in die Ausnehmung 11 der Halterung 10 bewegt und dann angehalten. Die Ausnehmung 11 der Halterung 10 ist vorzugsweise der Form, insbesondere der Querschnittskontur, des Stanzstempels 2 angepaßt, so daß der Nebenkörper 3 entlang des Randes der Ausnehmung 11 von der Halterung 10 optimal abgestützt ist und ein sauberer Stanzschnitt im wesentlichen ohne eine (sonstige) Verformung des Nabenkörpers 3 erreicht wird.

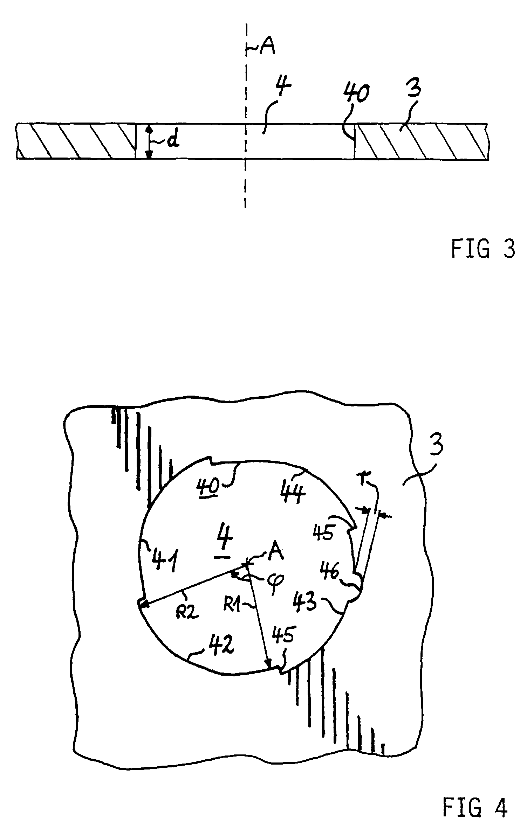

Das Ergebnis des Stanzprozesses gemäß den FIG 1 und 2 ist in den FIG 3 und 4 dargestellt. In dem Nabenkörper 3 ist als Nabe 4 ein Loch ausgestanzt (ausgeschnitten), dessen Innenwandung 40 eine Höhe aufweist, die der Dicke d des Nabenkörpers 3 entspricht. Die Gestalt des Stanzstempels 2 gemäß FIG 2 ist gemäß FIG 4 auf die Nabe 4 übertragen. Die konvexe Gestalt des Stanzstempels 2 bildet sich dabei in eine entsprechend konkave Gestalt der Nabe 4 ab. Die Mittelachse A des Stanzstempels 2 ist durch die parallel zu dieser Mittelachse A gewählte Stanzrichtung nun auch die Nabenachse der Nabe 4. Im einzelnen weist die Nabe 4 nun an ihrer Innenwandung 40 vier in Umfangsrichtung, in der Draufsicht von oben gemäß FIG 4 im Uhrzeigersinn, radial ansteigende Innenwandungsteilbereiche (Keilflächen) 41 bis 44 auf, die jeweils über Innenwandungsteilbereiche 45 miteinander verbunden sind. Die Innenwandungsteilbereiche 41 bis 44 entsprechen in ihrer Kontur den Konturen der Schneidkanten 21 bis 24 des Stanzstempels 2.

Die radiale Zunahme der Innenwandungsteilbereiche 41 bis 44 der Nabe 4 ist bei dem Innenwandungsteilbereich 42 veranschaulicht. Der Abstand des radial am weitesten innen liegenden Anfangsabschnittes des Innenwandungsteilbereiches 42 von der Nabenachse A, im folgenden auch Radius genannt, ist mit R1 bezeichnet, der Radius des radial am weitesten außen liegenden Endabschnittes des Innenwandungsteilbereiches 42 mit R2. Die radiale Zunahme des Abstandes des Innenwandungsteilbereiches 42 von der Nabenachse A in Umfangsrichtung, entsprechend dem zwischen den Radien R1 und R2 liegenden Polarwinkel ϕ, ist somit (R2-R1)/ϕ, wobei die Zunahme (Steigung) dR/dϕ (Ableitung des radialen Abstandes R nach dem Polarwinkel ϕ) an jedem Ort der Innenwandungsteilbereiches 42 gleich (R2-R1)/ϕ ist (konstante Steigung) oder variiert (veränderliche Steigung). Die Steigungen dR/dϕ der radial ansteigenden Innenwandungsteilbereichen 41 bis 44 der Nabe 4 werden insbesondere zwischen 0,005 und 0,02 gewählt, sowohl bei Ausführungsformen mit in Umfangsrichtung konstanter Steigung als auch mit in Umfangsrichtung zunehmender Steigung. Bei einem Radius R1 der Nabe 4 von beispielsweise zwischen 5 mm und 60 mm kann der maximale Unterschied R2-R1 zwischen den radial am weitesten innen und am weitesten außen liegenden Bereichen der Innenwandung 40 somit relativ gering ausfallen, typischerweise entsprechend zwischen 0,2 mm und 2 mm.

Der Innenwandungsteilbereich 43, der von der Schneidkante 23 geschnitten wurde, weist eine Einbuchtung 46 auf, die der Schneidvorsprung 26 beim Stanzen freigeschnitten hat. Die Einbuchtung 46 ist bezogen auf den Nabenkörper 3 konkav geformt und ragt radial von der Mittelachse A weiter nach außen als die umliegenden Bereiche des Innenwandungsteilbereiches 42 der Nabe 4. Der Abstand zwischen dem am weitesten von der Nabenachse A entfernten Bereich und dem am nächsten zur Nabenachse A liegenden Bereich der Innenwandung 50 in der Einbuchtung 46 ist mir r bezeichnet. Die Abmessung r ist im allgemeinen deutlich kleiner gewählt als der innere Radius R1 der Nabe 4. Bei den zuvor genannten Werten für den Radius R1 der Nabe 4 von beispielsweise zwischen 5 mm und 60 mm kann die radiale Abmessung r der Einbuchtung 46 der Nabe 4 zwischen 0,1 mm und 1,5 mm eingestellt werden. Die in Umfangsrichtung gemessene Abmessung kann in einem weiten Bereich variiert werden, sollte aber möglichst klein gewählt werden.

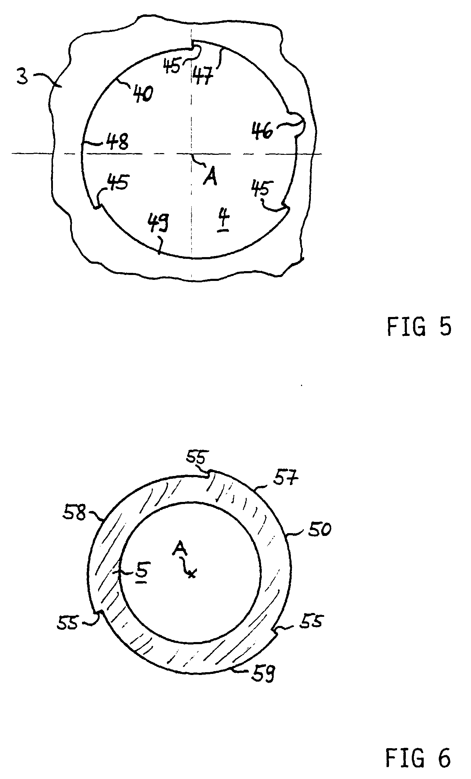

Der Zweck der Einbuchtung wird anhand des Ausführungsbeispieles einer Schaft-Nabe-Verbindung gemäß den FIG 5 bis 8 klar.

FIG 5 zeigt eine ähnlich wie in FIG 4 ausgebildete Nabe 4 mit dem Unterschied, daß anstelle von vier radial ansteigenden Innenwandungsteilbereichen nun nur drei Innenwandungsteilbereiche 47, 48 und 49 vorgesehen sind, die bezüglich der Mittelachse A mit einer dreizähligen Symmetrie angeordnet sind, d.h. bei Drehung um 120 Grad um die Mittelachse A ist die Nabe 4 jeweils deckungsgleich (kongruent), wieder mit Ausnahme der Einbuchtung 46, die in dem Innenwandungsteilbereich 47 gebildet ist.

FIG 6 zeigt einen an die Nabe 4 gemäß FIG 5 angepaßten Schaft (Bolzen) 5, der als Hohlschaft, wie dargestellt, aber auch als massiver Schaft ausgebildet sein kann und insbesondere auch als Welle zur Kraftübertragung dienen kann. Den Innenwandungsteilbereichen 47 bis 49 der Nabe 4 entsprechen korrespondierende, radial zunehmende Außenwandungsteilbereiche 57 bis 59 des Schaftes 5, die über Außenwandungsteilbereiche 55 miteinander verbunden sind.

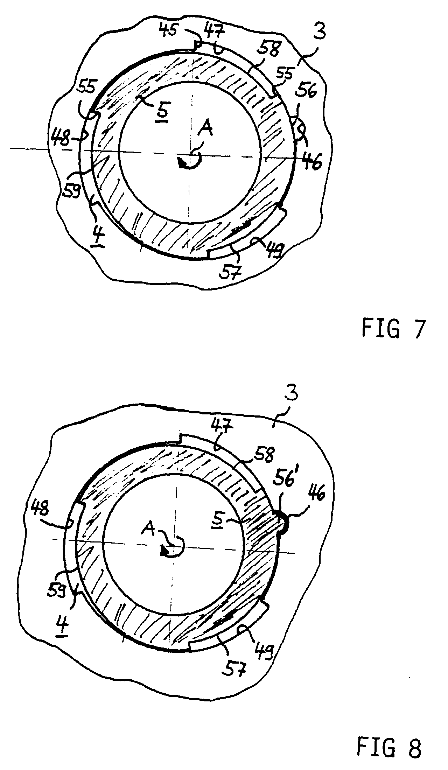

Die FIG 7 und 8 stellen nun die komplette Schaft-Nabe-Verbindung mit einer Nabe 4 gemäß FIG 5 und einem Schaft 5 gemäß FIG 6 dar. Zur Verbindung wird der Schaft 5 axial, d.h. parallel zur Mittelachse A, in die Nabe 4 derart eingefügt, daß die Außenwandungsteilbereiche 55 des Schaftes 5 und die Innenwandungsteilbereiche 45 der Nabe 4 nahe beieinander liegen oder einander sogar berühren. In dieser Stellung sind Schaft 5 und Nabe 4 mit Spiel gegeneinander beweglich, da zwischen den Außenwandungsteilbereichen 57 bis 59 des Schaftes 5 und den unmittelbar gegenüberliegenden Innenwandungsbereichen 47 bis 49 der Nabe 4 jeweils Spalte gebildet sind.

Dieses zunächst vorhandene Spiel zwischen Schaft 5 und Nabe 4 wird nun durch Drehung zwischen Schaft 5 und Nabe 4 um die gemeinsame Mittelachse A als Drehachse in der vorgegebenen, durch Pfeile gekennzeichneten Drehrichtung, hier im Uhrzeigersinn, aufgehoben. Bei diesem Verdrehen des Schaftes 5 relativ zur Nabe 4 wird nun zunächst jeder der Außenwandungsteilbereiche 57 bis 59 des Schaftes 5 mit dem korrespondierenden Innenwandungsteilbereich 47 bis 49 der Nabe 4 in Flächenkontakt gebracht. Bei nur geringer Drehung um einen kleinen Drehwinkel wird lediglich ein Reibschluß zwischen den Innenwandungsteilbereichen 47 bis 49 und den Außenwandungsteilbereichen 57 bis 59 erzeugt, bei weiterer Drehung, d.h. bei größerem Drehwinkel oder einem größeren Drehmoment, tritt dagegen ein Kraftschluß oder eine Flächenpressung ein (Preßverbindung). Durch die nun in Richtung der Flächennormalen wirkenden Verbindungskräfte werden die Außenwandungsteilbereiche 57 bis 59 des Schaftes 5 an die entsprechenden Innenwandungsteilbereiche 47 bis 49 der Nabe 4 gepreßt, so daß eine kraftschlüssige, selbsthemmende Verbindung zwischen Schaft 5 und Nabe 4 erreicht wird. Die Stärke des Kraftschlusses, also die Verbindungskräfte, zwischen Schaft 5 und Nabe 4 wird durch den Drehwinkel oder das Drehmoment bestimmt und kann durch nicht dargestellte zusätzliche Anschläge oder eine Drehmomentregelung genau auf einen vorgegebenen Wert eingestellt werden.

Der gegenüber der Einbuchtung 46 der Nabe 4 nach der Drehung zu liegen kommende Bereich des Außenwandungsteilbereiches 57 des Schaftes 5 ist in FIG 7 mit 56 bezeichnet und liegt zumindest unmittelbar nach dem Verdrehen des Schaftes 5 relativ zur Nabe 4 im Gegensatz zu den übrigen Bereichen dieses Außenwandungsteilbereiches 57 nicht an der Innenwandung 40 der Nabe 4 an, so daß dort singulär kein Kraftschluß herrscht.

Der Schaft 5 besteht nun zumindest an seiner Außenwandung 50, vorzugsweise jedoch insgesamt, aus einem Material, das sich bei dem vorgegebenen, nach der Drehung erzielten Kraftschluß plastisch verformt, also bei den wirkenden Kräften abhängig von der Zeit, die die Verbindung bereits besteht, durch Strukturänderungen nachgibt. Eine plastische Verformung ist eine irreversible (bleibende) Verformung aufgrund des wirkenden Druckes oder der wirkenden Zugspannung und beginnt oberhalb der Elastizitätsgrenze des Materials (anelastische Verformung). Das Material des Schaftes 5 kann bei dem vorgegebenen Kraftschluß auch schon ein plastisches Kaltfließverhalten zeigen, bei dem sich das Material selbst bei Kraftentlastung weiter verformt, eben fließt. Das Fließen setzt gemeinhin oberhalb der sogenannten Streckgrenze des Materials ein. Die plastische Verformung kann bei unterschiedlichen Materialien nach unterschiedlichen Zeiträumen einsetzen, die von wenigen Minuten bis mehrere Wochen und Monate dauern können.

Ein bevorzugtes Material für den Schaft 5 ist ein Polymer-Werkstoff, insbesondere ein Polymer-Kunststoff, also ein synthetisch hergestelltes Polymer oder Polymergemisch. Grundsätzlich kommen hier alle plastisch verformbaren, thermoplastischen und duroplastischen, Polymermaterialien in Frage. Ohne Beschränkung der Allgemeinheit seien entsprechend gebildete halogenierte und nicht halogenierte Kohlenwasserstoffpolymere genannt, beispielsweise Polyethylen-, Polypropylen-, Polystyrol-, Polyurethan-, Polyvinylchlorid- und Fluorcarbon-Werkstoffe. Der Schaft 5 wird vorzugsweise als Formteil in einem Gieß- oder Spritzgießverfahren hergestellt.

Wenn nun die plastische Verformung im Material des Schaftes 5 nach einer materialabhängigen Zeitdauer einsetzt, so weicht das Material an dem Außenwandungsteilbereich 57 wegen des dort praktisch nicht vorhandenen Druckes in die Einbuchtung 46 im Nabenkörper 3 aus. Es bildet sich somit gemäß FIG 8 ein Fortsatz (Vorsprung, Nase, Ausbuchtung, Ausformung) 56' aus der Außenwandung 50 des Schaftes 5 aus, wo vorher gemäß FIG 7 der Bereich 56 war. Der Fortsatz 56' greift in die Einbuchtung 46 formschlüssig ein und bildet dadurch eine automatisch entstandene Arretierung, die ein Lösen der Schaft-Nabe-Verbindung durch Drehung verhindert.

Der Nabenkörper 3 wird vorzugsweise aus einem beim vorgegebenen Kraftschluß nicht oder nur vernachlässigbar nachgiebigen Material gebildet, um eine sichere Arretierung des Fortsatzes 56' in der Einbuchtung 46 zu gewährleisten. Ein derart formstabiles Material ist insbesondere ein Metall wie beispielsweise ein Stahl oder Aluminium oder eine Aluminiumlegierung oder auch ein entsprechender Kunststoff, beispielsweise ein faserverstärkter Kunststoff.

Das Blech des Nabenkörpers 3 kann nach dem Stanzen der Nabe 4 und vor dem Einführen des Schafts 5 auch in einem Zwischenschritt emailliert werden. Es hat sich überraschenderweise gezeigt, daß bei der Schaft-Nabe-Verbindung gemäß der Erfindung durch die flächige Verbindung und gleichmäßige Kraftübertragung auch die als Emailabbrand bezeichnete Emailanhäufung an den Kanten des gestanzten Loches der Nabe 4 nicht zu einem Abplatzen des Emails bei der Verbindung führt, wie dies bei üblichen Schraubverbindungen oft der Fall ist.

Die Dicke d des Nabenkörpers 3 beträgt in den bislang beschriebenen Ausführungsformen als Blech im allgemeinen höchstens 5 mm, so daß ein Stanzprozeß problemlos möglich ist, und vorzugsweise höchstens 1 mm, insbesondere um Material einzusparen. Es hat sich gezeigt, daß selbst bei diesen vergleichsweise geringen Dicken d bzw. Tiefen der Nabe 4 dennoch eine sichere und haltbare Verbindung zwischen der Nabe 4 und dem Schaft 5 möglich ist.

Die Nabe 4 kann aber außer durch Stanzen auch durch einen anderen Prozeß hergestellt werden, beispielsweise durch Tiefziehen, Materialabtragung wie Fräsen oder direkt in einem Formteil in einem Gießverfahren. Außerdem kann auch eine Nabe bzw. Schaft-Nabe-Verbindung mit einem aus einer der eingangs genannten Druckschriften *DE 42 09 153 C2* oder *DE 196 33 541 A1* oder aus der W*O 94/07040 A1* oder der *WO 92 16763 A1* bekannten Aufbau verwendet werden. Bei einer nicht gestanzten Nabe kann die Einbuchtung 46 der Nabe 4 auch ringsum mit Ausnahme zum Schaft 5 hin geschlossen ausgebildet sein, so daß durch den eingreifenden Fortsatz 56' des Schaftes 5 auch eine axiale Sicherung, also eine Arretierung gegen eine axiale Bewegung parallel-zur Mittelachse A, gebildet ist. Im übrigen könnte auch der Schaft der Verbindung gestanzt werden.

Die Nabe 4 kann in allen Ausführungsformen auch an einem Innenwandungsteilbereich mehrere Einbuchtungen oder an mehreren Innenwandungsteilbereichen jeweils eine oder mehrere Einbuchtungen aufweisen, um die Arretierungswirkung bei plastischer Verformung des Schaftes zu verstärken. Anstelle einer Einbuchtung kann die Nabe in einer nicht dargestellten Abwandlung auch eine nach außen durchgehende Öffnung aufweisen, so daß das Material des Schaftes an der gegenüberliegenden Seite des Nabenkörpers austreten kann und die Sperrwirkung der Arretierung noch verstärkt wird.

In einer anderen Ausführungsform kann auch der Nabenkörper 3 aus einem plastisch verformbaren Material gebildet werden. Es wird dann entsprechend der Schaft mit einer oder mehreren Einbuchtungen versehen, so daß das Material des Nabenkörpers bei Belastung in die Einbuchtung des Schaftes fließen kann.

Die beschriebene Schaft-Nabe-Verbindung ist in einer Vielzahl von Anwendungsgebieten einsetzbar. Ohne Beschränkung der Allgemeinheit sei hier der Bereich der Haushaltsgeräte genannt, in dem bei den meisten Verbindungen von Bauteilen (Funktionseinheiten) miteinander oder mit Trägern nur relativ geringe Kräfte von der Schaft-Nabe-Verbindung zu tragen sind. Zu denken ist hier beispielsweise an die Befestigung von statischen wie drehenden Teilen an entsprechenden Trägern, insbesondere Elektromotoren, Strömungsmaschinen (Pumpen, Gebläsen) oder Kompressoren an einem Gehäuse, Drehknebeln vor einer Bedienblende an entsprechenden Steuerund/oder Regelmodulen hinter der Bedienblende, Filtern, Scharnieren an Türen und Gehäusen, Sprüharmen, Behältern, Befestigung von Rohren und Schläuchen etc. Als Haushaltsgeräte kommen grundsätzlich alle bekannten Haushaltsgeräte in Frage, insbesondere Gargeräte, Waschmaschinen, Wäschetrocknern, Geschirrspülmaschinen, Kühl-und/oder Gefriergeräte, Staubsauger, Kaffeemaschinen, Küchenmaschinen und Mixer.

### Bezugszeichenliste

- 2: Stanzstempel
- 3: Nabenkörper
- 4: Nabe
- 5: Schaft
- 10: Halterung
- 11: Ausnehmung
- 20: Unterseite
- 40: Innenwandung
- 41 bis 45: Innenwandungsteilbereiche
- 46: Einbuchtung
- 47 bis 48: Innenwandungsteilbereiche
- 50: Außenwandung
- 51 bis 55: Außenwandungsteilbereiche
- 56: Bereich
- 56': Fortsatz
- 57 bis 58: Außenwandungsteilbereiche
- d: Dicke
- R1,R2: Radius
- r: radiale Abmessung
- A: Achse
- ϕ: Polarwinkel

## Patentansprüche

1. Schaft-Nabe-Verbindung mit
a) einer Nabe (4), die an ihrer Innenwandung (40) eine vorgegebene Anzahl von jeweils im Abstand zu einer Nabenachse (A) in Umfangsrichtung zunehmenden oder abnehmenden Innenwandungsteilbereichen (41 bis 44 bzw. 46 bis 48) aufweist,
b) einem Schaft (5), der an seiner Außenwandung (50) eine vorgegebene Anzahl von jeweils im Abstand zu einer Schaftachse in Umfangsrichtung zunehmenden oder abnehmenden Außenwandungsteilbereichen (56 bis 58) aufweist,
wobei
c) der Schaft (5) in die Nabe (4) einfugbar ist und durch eine Drehung zwischen Schaft (5) und Nabe (4) zwischen jedem der genannten Außenwandungsteilbereiche (56 bis 58) des Schaftes (5) und jeweils einem der genannten Innenwandungsteilbereiche (41 bis 44, 46 bis 48) der Nabe (4) ein vorgegebener Kraftschluß erzeugbar ist,
d) der Schaft zumindest an seiner Außenwandung und/oder die Nabe zumindest an ihrer Innenwandung aus einem Material besteht, das bei dem vorgegebenen Kraftschluß ein plastisches Verformungsverhalten, insbesondere ein Fließverhalten, zeigt,
e) die Innenwandung der Nabe und/oder die Außenwandung des Schaftes an wenigstens einem ihrer Innenwandungsteilbereiche wenigstens eine Einbuchtung (46) oder Öffnung aufweist und
f) das plastisch verformbare Material bei dem vorgegebenen Kraftschluß, insbesondere nach einer materialabhängigen Zeitdauer, in die wenigstens eine Einbuchtung oder Öffnung eindringt.

2. Schaft-Nabe-Verbindung nach Anspruch 1, bei der die Nabe (4) zumindest an ihrer Innenwandung oder der Schaft zumindest an seiner Außenwandung aus einem beim vorgegebenen Kraftschluß nicht plastisch verformbaren Material, insbesondere einem Metall, beispielsweise Stahl oder Aluminium, oder einem Kunststoff, besteht.

3. Schaft-Nabe-Verbindung nach einem der vorhergehenden Ansprüche, bei der das plastisch verformbare Material für den Schaft (5) bzw. die Nabe ein Polymermaterial ist.

4. Schaft-Nabe-Verbindung nach einem der vorhergehenden Ansprüche, bei der der Schaft (5) in die Nabe (4) eingefügt und Schaft (5) und Nabe (4) so gegeneinander verdreht sind, daß der vorgegebene Kraftschluß zwischen jedem Außenwandungsteilbereich (56 bis 58) des Schaftes (5) und dem jeweils zugeordneten Innenwandungsteilbereich (41 bis 44, 46 bis 48) der Nabe (4) erzeugt ist.

5. Schaft-Nabe-Verbindung nach Anspruch 4, bei der aus dem plastisch verformbaren Material des Schaftes (5) bzw. der Nabe (4) durch die plastische Verformung infolge des Kraftschlusses ein Fortsatz (56')ausgeformt ist, der in die Einbuchtung (46) oder Öffnung eingreift.

6. Schaft-Nabe-Verbindung nach einem der vorhergehenden Ansprüche, bei der die Einbuchtung oder Öffnung parallel zur Nabenachse bzw. Schaftachse offen ist.

7. Schaft-Nabe-Verbindung nach einem der vorhergehenden Ansprüche, bei der die Einbuchtung oder Öffnung parallel zur Nabenachse bzw. Schaftachse geschlossen ist.

8. Schaft-Nabe-Verbindung nach einem der vorhergehenden Ansprüche, bei der an der Innenwandung der Nabe bzw. der Außenwandung des Schaftes mehrere Einbuchtungen oder Öffnungen vorgesehen sind.

9. Schaft-Nabe-Verbindung nach einem der vorhergehenden Ansprüche, bei der die im Abstand zur Nabenachse bzw. Schaftachse ansteigenden oder abfallenden Innenwandungsteilbereiche der Nabe bzw. Außenwandungsteilbereiche des Schaftes eine in Umfangsrichtung im wesentlichen konstante Steigung aufweisen.

10. Schaft-Nabe-Verbindung nach einem der vorhergehenden Ansprüche, bei der die Nabe bezüglich der Nabenachse und der Schaft bezüglich der Schaftachse im wesentlichen eine Rotationssymmetrie einer vorgegebenen Zähligkeit aufweisen.

11. Schaft-Nabe-Verbindung nach einem der vorhergehenden Ansprüche, bei der die Innenwandung der Nabe parallel zur Nabenachse eine Ausdehnung von höchstens etwa 5 mm, vorzugsweise höchstens 1 mm, aufweist.

12. Verfahren zum Herstellen einer Nabe (4) für eine Schaft-Nabe-Verbindung nach einem der vorhergehenden Ansprüche, bei dem die Nabe aus einem Nabenkörper (3) ausgestanzt wird.
